# EUROPÄISCHE PATENTSCHRIFT

(11) **EP 2 381 815 B1**
(45) Veröffentlichungstag und Bekanntmachung des Hinweises auf die Patenterteilung: **27.03.2013**
(21) Anmeldenummer: 09764800.0
(22) Anmeldetag: 02.12.2009
(51) Int. Cl.: F16B 5/01, A47B 96/06, F16B 12/24

(54) **BEFESTIGUNGSANORDNUNG ZUR MONTAGE EINES WANDBOARDS**
FASTENING ARRANGEMENT FOR MOUNTING A WALL SHELF
DISPOSITIF DE FIXATION POUR LE MONTAGE D'UNE ÉTAGÈRE MURALE

(30) Priorität: 23.01.2009 DE 102009006015; 29.06.2009 DE 102009031101
(43) Veröffentlichungstag der Anmeldung: 02.11.2011
(73) Patentinhaber: Fritz Egger GmbH & Co. OG, 3105 Unterradlberg (AT)
(72) Erfinder: REITER, Bruno, A-6480 St. Johann in Tirol (AT)
(74) Vertreter: Cohausz & Florack
(86) Internationale Anmeldenummer: PCT/EP2009/066246
(87) Internationale Veröffentlichungsnummer: WO 2010/083916

(56) Entgegenhaltungen:
- WO-A1-91/18215
- DE-U1-202008 002 540

## Beschreibung

Die Erfindung betrifft gemäβ anspruch 1, eine Befestigungsanordnung zur Montage eines Wandboards an einer Wandoberfläche mit einer sich von einer ersten Schmalseite zu einer zweiten Schmalseite in Längsrichtung erstreckenden Leichtbauplatte, die eine obere Deckplatte, eine untere Deckplatte und eine dazwischen angeordnete leichte Mittellage aufweist, und mit mindestens einem Stützbeschlag, der ein Wandfixierungsmittel und ein mit dem Wandfixierungsmittel verbundenes Stützmittel aufweist. Ferner betrifft die Erfindung ein entsprechendes Verfahren zur Herstellung einer solchen Befestigungsanordnung. Auch betrifft die Erfindung ein Halteteil für eine Befestigungsanordnung.

Im Möbelbau sind Regalbretter zur direkten Befestigung an einer Wand bekannt. Diese Regalbretter werden auch Wandboards oder Wandregale genannt. Da solche Wandboards ein relativ hohes Gewicht haben, wenn diese aus Vollmaterial, beispielsweise Vollspan, hergestellt sind, werden diese zunehmend aus Leichtbauplatten hergestellt, also einer Platte, die einen Aufbau mit einer oberen Deckplatte, einer unteren Deckplatte und einer dazwischen angeordneten leichten Mittellage aufweist. Mit einer leichten Mittellage ist eine Lage aus einem Material gemeint, die ein geringeres Gewicht, bzw. eine geringere Dichte als das Deckplattenmaterial hat und beispielsweise aus mineralischer Dämmwolle, einer Wabenstruktur, insbesondere aus Kartonwaben, oder aus ähnlichen Materialien besteht.

Ein Wandboard der zuvor beschriebenen Art, das üblicherweise zumindest an.den sichtbaren Seiten mit einer Beschichtung versehen ist, kann auf verschiedene Weise an der Wandoberfläche montiert werden.

So ist es bekannt, ein Wandboard mittels einer darunter angeordneten Konsole an der Wand zu montieren. Nachteilig bei dieser Art einer Befestigungsanordnung ist allerdings, dass die Beschlagteile, das heißt die Bauteile der Konsole, sichtbar sind, was oftmals unerwünscht ist. Daneben müssen die Beschlagteile optisch ansprechend gestaltet sein und sind daher relativ teuer.

Es sind daher im Stand der Technik für den Fall, dass als Wandboard eine Leichtbauplatte montiert werden soll, Befestigungsanordnungen mit verdeckten Stützbeschlägen bekannt. So ist beispielsweise ein U-förmiger Bügel bekannt, der mit seiner Grundseite an der Wandoberfläche beispielsweise mittels Verschraubung befestigt wird und dessen beide Arme ins Innere der Leichtbauplatte eingreifen, derart, dass nur die obere Deckplatte der Leichtbauplatte unmittelbar auf den beiden Armen des Stützbeschlags aufliegt. Dies führt allerdings zu einer relativ schlechten Krafteinleitung und in der Folge zu einer relativ geringen Belastbarkeit. Darüber hinaus können unerwünschte Verformungen und vorzeitige Schäden an dem Wandboard durch diese Art der Befestigung hervorgerufen werden.

Weiterhin ist ein Beschlag zum Festlegen einer Leichtbauplatte aus DE 20 2008 002540 U1 bekannt.

Ferner ist aus dem Stand der Technik auch eine Befestigungsanordnung unter Verwendung einer Leichtbauplatte bekannt, bei der Spezialdübel in eine aufwendig einzubringende Ausnehmung an einer der Leichtbauplattenschmalseiten eingeklebt werden. Die Leichtbauplatte wird mit den Dübeln auf an der Wand montierte bolzenförmige Stützbeschläge aufgeschoben. Durch das Verkleben erfolgt auch eine Verbindung der Dübel mit der unteren Deckplatte und teilweise mit der Mittellage, wodurch die Krafteinleitung beim montierten Wandboard verbessert wird. Neben den vergleichsweise hohen Kosten des Dübels ist die Herstellung der Ausnehmung und die Klebung allerdings relativ aufwendig und teuer.

Es ist daher die Aufgabe der vorliegenden Erfindung, eine Befestigungsanordnung zur Montage eines Wandboards unter Verwendung einer Leichtbauplatte bereitzustellen, mit der die Wandmontage vereinfacht wird.

Die zuvor hergeleitete und aufgezeigte Aufgabe wird gemäß einer ersten Lehre der vorliegenden Erfindung bei einer Befestigungsanordnung der eingangs genannten Art dadurch gelöst, dass mindestens ein Halteteil quer zur Längsrichtung in die Mittellage integriert ist und dass das mindestens eine Halteteil mit einer stirnseitigen Aufnahme für das Stützmittel versehen ist. Grundsätzlich kann es sich bei dem Halteteil, von dem auch mehrere vorgesehen sein können, um einen Adapter, beispielsweise in Form eines Spritzgussteils, oder um einen Querriegel, beispielsweise in Form eines Balkens aus einem Holzwerkstoff oder aus Vollholz, handeln.

Indem mindestens ein Halteteil, vorzugsweise mindestens zwei Halteteile, mit einer stirnseitigen Aufnahme, beispielsweise einer Bohrung, in die Mittellage der Leichtbauplatte integriert werden, wird mit einfachen Mitteln eine Möglichkeit zu einer stabilen Befestigung eines Wandboards an einer Wandoberfläche geschaffen. Die erfindungsgemäße Befestigungsanordnung erlaubt hohe Belastungen, da auf die Leichtbauplatte wirkende Lasten über das Halteteil bzw. die Halteteile optimal aufgenommen und an den Stützbeschlag weitergeleitet werden können. Ein weiterer Vorteil ist, dass durch die Anordnung der Aufnahme für das Stützmittel innerhalb des Halteteils und damit innerhalb der Leichtbauplatte die Bauteile des Stützbeschlages nicht sichtbar sind, sondern im montierten Zustand des Wandboards von diesem verdeckt werden.

Die Anzahl bzw. der Abstand der Halteteile ist beliebig wählbar, wodurch auch die Länge und die erforderliche Tragkraft des Wandboards wählbar ist. Zur Anordnung der Halteteile, insbesondere wenn es sich dabei um Querriegel handelt, innerhalb der Leichtbauplatte können Ausnehmungen auf relativ einfache Weise hergestellt werden, beispielsweise aus einem Leichtbauplattenstrang, also einer großformatigen Leichtbauplatte, die in den gewünschten Abmessungen abgelängt wird, wobei an den Schnittkanten, die die beiden Schmalseiten der Leichtbauplatte bilden, lediglich etwas Material der leichten Mittellage entfernt werden muss und ein Querriegel dann ohne weiteres in die so entstandene Ausnehmungen eingeschoben werden kann. Das entsprechende Herstellungsverfahren wird im Weiteren noch näher erläutert.

Hinsichtlich der Querriegel sei darauf hingewiesen, dass diese vorzugsweise als sogenannte lose Querriegel in die Leichtbauplatte integriert werden. Der Begriff "lose" meint dabei im Sinne der vorliegenden Erfindung, dass der Querriegel nicht mit Längsriegeln verbunden ist und nicht Bestandteil eines Rahmens ist. Der Begriff "lose" bedeutet nicht, dass der Querriegel im Plattenaufbau beweglich ist, sondern der Querriegel kann mit einer oder beiden Deckplatten, beispielsweise durch Verkleben, fest verbunden sein.

Noch ein weiterer Vorteil ist, dass die erfindungsgemäße Befestigungsanordnung keine Spezialbeschläge erfordert, sondern Stützbeschläge wie für herkömmliche, massive ausgeführte Wandboards verwendet werden können. Da zur Montage an der Wandoberfläche nur mechanische Verbindungsmittel verwendet werden, ist auch eine hohe Prozesssicherheit gewährleistet.

Gemäß einer Ausgestaltung der erfindungsgemäßen Befestigungsanordnung ist die Leichtbauplatte frei von sich in Längsrichtung erstreckenden Riegeln, das heißt sogenannten Längsriegeln. Lediglich das Vorhandensein eines oder mehrerer Halteteile muss gewährleistet sein, um die Platte optimal an der Wandoberfläche montieren zu können. In dem Fall, dass es sich bei dem Halteteil um einen Adapter und nicht einen Querriegel handelt, kann die Leichtbauplatte grundsätzlich auch frei von jeglichen Riegeln, auch Querriegeln, sein. Die Leichtbauplatte kann damit sehr einfach aufgebaut sein. Dies wiederum hat den Vorteil einer besonders einfachen Herstellung, da lediglich riegellose großformatige Leichtbauplatten gefertigt werden brauchen, aus denen durch Ablängen und Einsetzen von Adaptern und/oder Querriegeln an den vorgesehenen Stellen Wandboards in jeder gewünschten Länge erhalten werden können.

Gemäß einer Ausgestaltung der erfindungsgemäßen Befestigungsanordnung ist das mindestens eine Halteteil ein Adapter, der einen erste Abschnitt mit einem größeren Querschnitt und einen sich daran anschließenden zweiten Abschnitt mit einem kleineren Querschnitt hat. Der erste Abschnitt, der den relativ zum zweiten Abschnitt größeren Querschnitt hat, ist dabei im bestimmungsgemäß eingebauten Zustand zur Außenseite der Leichtbauplatte gewandt, wobei zumindest ein Teilabschnitt des ersten Abschnitts auch zwischen den Deckplatten der Leichtbauplatte anordenbar ist, wohingegen der zweite Abschnitt ins Innere der Leichtbauplatte gerichtet ist und somit vollständig zwischen den beiden Deckplatten der Leichtbauplatte anordenbar ist. Der zweite Abschnitt kann über seine Länge wiederum in mindestens zwei Teilabschnitte unterteilt sein, wobei der Teilabschnitt mit dem größeren Querschnitt vorzugsweise eine Höhe hat, die dem Abstand zwischen den beiden Deckplatten der Leichtbauplatte entspricht.

Der Adapter wird vorzugsweise von der zum Stützbeschlag gewandten Längsseite der Leichtbauplatte in Richtung der anderen Längsseite, das heißt quer zur Längsrichtung der Leichtbauplatte, eingesetzt bzw. eingeschoben. Diese Richtung sei im Folgenden als Einschubrichtung bezeichnet.

Gemäß einer Ausgestaltung der erfindungsgemäßen Befestigungsanordnung ist der Adapter, insbesondere der erste Abschnitt und/oder der zweite Abschnitt, mittels Stoffschluss mit der Leichtbauplatte verbunden. Der Stoffschluss kann durch ein mit dem Adapter, insbesondere dem ersten Abschnitt und/oder dem zweiten Abschnitt, verbundenes oder verbindbares, aktivierbares Klebemittel erreicht werden, wobei das Klebemittel insbesondere so ausgebildet ist, dass es durch den Vorgang des Einsetzens des Adapters in die Leichtbauplatte, also wenn der Adapter zwischen die Deckplatten geschoben wird, aktivierbar ist. Auf diese Weise wird eine besonders einfache und saubere Art des Verbindens des Adapters mit der Leichtbauplatte geschaffen. Außerdem ist es möglich, das Klebemittel, da es zum Zeitpunkt des Einsetzens des Adapters noch nicht aktiviert ist, also noch nicht seine volle Klebewirkung entfaltet, bereits bei der Herstellung des Adapters mit diesem zu verbinden, was besonders einfach in einer automatisierten Herstellung durchführbar ist.

Das aktivierbare Klebemittel kann auf verschiedene Weise ausgebildet sein. Beispielsweise kann es in Form mindestens einer Leimperle, eines mikroverkapselten Klebemittels und/oder eines durch Abziehen einer Schutzfolie und/oder Benetzung mit einem Lösungsmittel, beispielsweise Wasser, aktivierbaren Klebemittels auf dem Adapter, insbesondere dem ersten Abschnitt und/oder dem zweiten Abschnitt, appliziert sein. Bei einer Leimperle handelt es sich um ein in einer Hülle eingeschlossenes, in der Regel flüssiges Klebemittel, wobei die Hülle selbst nicht klebend ausgebildet ist. Eine solche Leimperle wird dadurch aktiviert, dass Druck auf die Hülle ausgeübt wird, bis diese, beispielsweise durch eine Scherbewegung zwischen zwei Bauteilen, aufplatzt und sich der darin befindliche Leim verteilt. Eine Leimperle kann einen Durchmesser von mehreren Millimetern und nahezu jede beliebige Form haben.

Das Klebemittel, insbesondere die mindestens eine Leimperle, ist bevorzugt auf dem Teilabschnitt des zweiten Abschnitts, der den größeren Querschnitt als der übrige Teil des zweiten Abschnitts hat, appliziert. Dieser Teilabschnitt ist vorzugsweise der Teil des Adapters, der mit den beiden Deckplatten in Kontakt kommt und am besten dazu geeignet ist, eine Klebemittelverbindung mit der Innenseite der jeweils gegenüberliegenden Deckplatte einzugehen.

Es ist denkbar, dass mehrere Leimperlen quer zur Einschubrichtung des Adapters nebeneinander auf dem Adapter, insbesondere dem ersten Abschnitt und/oder dem zweite Abschnitt, angeordnet sind. Es ist auch denkbar, dass bei mehreren Leimperlen diese auch etwas versetzt zueinander angeordnet sind, wodurch eine verbesserte Klebemittelverteilung erreicht wird. Selbstverständlich können auch mehrere Reihen von Leimperlen, insbesondere auch von versetzt angeordneten Leimperlen, vorgesehen sein.

Ferner kann vorgesehen sein, dass die mindestens eine Leimperle in einer Vertiefung des Adapters, insbesondere des ersten Abschnitts und/oder des zweiten Abschnitts, angeordnet ist, wobei die Tiefe der Vertiefung vorzugsweise kleiner als die Länge der mindestens einen Leimperle ist und/oder wobei die mindestens eine Leimperle in die jeweilige Vertiefung nur so tief eingesetzt ist, dass ein Teil der mindestens einen Leimperle aus der Vertiefung herausragt. Besagte Vertiefung kann beispielsweise eine Bohrung, insbesondere Sacklochbohrung, sein. Grundsätzlich ist es sogar denkbar, eine durchgehende Bohrung von der Adapteroberseite bis zur Adapterunterseite vorzusehen, wobei auf beiden Seiten eine Leimperle in die durchgängige Bohrung eingesetzt wird. Vorzugsweise sind die Leimperlen dabei so ausgebildet, dass sie sich in der Vertiefung, insbesondere in der Bohrung, beispielsweise der durchgehenden Bohrung, verklemmen. Die mindestens eine Leimperle kann auf der vorderen Hälfte (bezogen auf die Einschubrichtung des Adapters) des zweiten Abschnitts, insbesondere des Teilabschnitts des zweiten Abschnitts, der den größeren Querschnitt als der übrige Teil des zweiten Abschnitts aufweist, angeordnet sein. Auf diese Weise ist eine größtmögliche Verteilung des Klebemittels auf der Adapteroberfläche beim Vorgang des Einsetzens des Adapters gewährleistet.

Gemäß einer weiteren Ausgestaltung der erfindungsgemäßen Befestigungsanordnung kann zusätzlich oder alternativ zu dem zuvor beschriebenen Stoffschluss auch vorgesehen sein, dass der Adapter, insbesondere der erste Abschnitt und/oder der zweite Abschnitt, mittels Kraftschluss mit der Leichtbauplatte verbunden ist. Ein solcher Kraftschluss kann durch außenseitige Vorsprünge am Adapter, die mit der Leichtbauplatte, insbesondere der oberen Deckplatte und/oder der unteren Deckplatte, zusammenwirken, erreicht werden. Diese Vorsprünge können sich beim Einschieben des Adapters an der Innenseite der unteren und/oder oberen Deckplatte eingraben und/oder entgegen der Einschubrichtung des Adapters eine so hohe Reibkraft erzeugen, dass der Adapter nur unter erhöhtem Kraftaufwand wieder aus der Leichtbauplatte herausgezogen werden kann.

In dem Fall, dass zum Verbinden des Adapters mit der Leichtbauplatte eine Kombination von Stoffschluss und Kraftschluss verwendet wird, ist das Klebemittel, insbesondere die mindestens eine Leimperle, vorzugsweise im Bereich der Vorsprünge appliziert. Auf diese Weise kann sich beim Einsetzen des Adapters in die Leichtbauplatte das Klebemittel optimal in dem Bereich, in welchem der Adapter die Deckplatten berührt und in welchem der Kraftschluss aufgebaut ist, verteilen. Wie zuvor angedeutet, ist aber eine Kombination von Stoffschluss und Kraftschluss nicht zwingend erforderlich, sondern es kann auch auf den Stoffschluss verzichtet werden.

So ist gemäß einer weiteren Nicht erfindungsgemäβen Ausgestaltung bei Verwendung eines wie zuvor beschriebenen Adapters der Adapter, insbesondere der erste Abschnitt und/oder der zweite Abschnitt vollständig klebemittelfrei mit der Leichtbauplatte verbunden. Statt vollständig kann der erste und/oder zweite Abschnitt auch nur teilweise klebemittelfrei, beispielsweise nur mit dem Teilabschnitt des zweiten Abschnitts mit dem kleineren Querschnitt und/oder mit den nicht parallel zu den Deckplatten verlaufenden Seitenflächen des Teilabschnitts des zweiten Abschnitts mit dem größeren Querschnitt, mit der Leichtbauplatte verbunden sein. Klebemittelfrei bedeutet dabei, dass der jeweilige Adapterteil bzw. Abschnitt bzw. der gesamte Adapter keine stoffschlüssige Verbindung mit der übrigen Leichtbauplatte eingeht und dadurch auf besonders einfache Weise in die Leichtbauplatte eingesetzt werden kann. Der Adapter kann damit mit der übrigen Leichtbauplatte lösbar verbunden werden. Trotz der klebemittelfreien Verbindung zwischen Adapter und Leichtbauplatte können auftretende Kräfte vom Adapter aufgenommen und auf den an der Wand befestigten Stützbeschlag übertragen werden. Bevorzugte Befestigungsmethoden werden im Folgenden noch beschrieben. Ein weiterer Vorteil einer klebemittelfreien Verbindung ist, dass der Zeitaufwand bei der Montage des Adapters verringert wird, da kein Klebemittel appliziert werden muss und darüber hinaus auch nicht aushärten muss. Auch wird der technische Aufwand zur Herstellung, insbesondere bei Vorhandensein einer automatisierten Fertigungslinie, deutlich reduziert. Schließlich entfallen auch die Kosten des Klebemittels, das bei Anwendungen dieser Art relativ hochwertig und damit teuer wäre.

Der erste Abschnitt kann dabei mit der oberen Deckplatte und der unteren Deckplatte, insbesondere mit mindestens einer Ausnehmung in der oberen Deckplatte und/oder der unteren Deckplatte, haltend zusammenwirken. Auf diese Weise kann die obere und/oder untere Deckplatte, insbesondere die mindestens eine Ausnehmung in der jeweiligen Deckplatte, beim Einsetzen des Adapters auch einen Anschlag in Einschubrichtung bilden.

Der zweite Abschnitt kann zumindest über einen Teil seiner Länge, insbesondere über den Teilabschnitt, der gegenüber dem übrigen Teil des zweiten Abschnitts den größeren Querschnitt hat, mit der oberen Deckplatte und der unteren Deckplatte haltend zusammenwirken. Der bereits beschriebene Kraftschluss, auch Reibschluss genannt, kann dadurch erreicht werden, dass der zweite Abschnitt zumindest über einen Teil seiner Länge, insbesondere über den Teilabschnitt, der gegenüber dem übrigen Teil des zweiten Abschnitts den größeren Querschnitt hat, mit den Vorsprüngen versehen ist. Die Vorsprünge sind dabei insbesondere an der zur oberen Deckplatte und/oder unteren Deckplatte weisenden Seite des zweiten Abschnitts bzw. des genannten Teilabschnitts vorgesehen. Die zur Mittellage weisenden Seiten benötigen nicht zwingend solche Vorsprünge, können aber durchaus zur Verbesserung der Verbindungswirkung ebenfalls Vorsprünge aufweisen.

Die Vorsprünge können von Rippen gebildet werden, die vorzugsweise quer zur Einschubrichtung verlaufen. Die Rippen weisen dabei insbesondere einen zahnförmigen Querschnitt auf, der vorzugsweise entgegen der Einschubrichtung geneigt ist, so dass ein Tannenzapfenprofil vorliegt. Mit anderen Worten ist vorzugsweise die Mittellinie zwischen den beiden Zahnflanken eines zahnförmigen Querschnitts entgegen der Einschubrichtung geneigt, wodurch erreicht wird, dass der Widerstand in Einschubrichtung kleiner als in entgegen gesetzter Richtung ist. Der Adapter kann damit relativ leicht in die Leichtbauplatte eingesetzt werden, wobei ein Herausziehen wie gesagt nur unter einem deutlich erhöhten Kraftaufwand möglich ist.

Gemäß einer weiteren Ausgestaltung ist vorgesehen, dass sich der zweite Abschnitt des Adapters zumindest über einen Teil seiner Länge, insbesondere in dem Teilabschnitt, der gegenüber dem übrigen Teil des zweiten Abschnitts einen kleineren Querschnitt hat, außen verjüngt. Auf diese Weise ist ein Teil des Adapters nach vorne hin spitz zulaufend ausgebildet, wodurch er einfacher in die Leichtbauplatte, insbesondere in das Material der Mittellage, eingeschoben werden kann. Außerdem führt dies zu einer Materialeinsparung. Die sich insbesondere außen verjüngende Form des Adapters ermöglicht, nur dort Material einzusetzen, wo die höchsten Kräfte auftreten, also insbesondere zur Stirnseite hin. Zusätzlich oder alternativ kann sich der zweite Abschnitt zumindest über einen Teil seiner Länge, insbesondere in dem Teilabschnitt, der gegenüber dem übrigen Teil des zweiten Abschnitts einen kleineren Querschnitt hat, auch innen verjüngen. Auf diese Weise wird mit einfachen Mitteln beim Einführen des Stützmittels des Stützbeschlags in die stirnseitige Aufnahme eine zumindest in vertikaler Richtung spielfreie Verbindung und vorzugsweise ein Presssitz erreicht.

Besagte stirnseitige Aufnahme, gemeint ist ein sich von der Stirnseite des Halteteils zu seinem ins Innere der Leichtbauplatte gerichteten Ende weisendes Loch eines beliebigen Querschnitts, kann sich vollständig durch den ersten Abschnitt und insbesondere zumindest auch teilweise durch den zweiten Abschnitt des Adapters erstrecken. Eine solche Aufnahme führt zu einer besonders stabilen Verbindung zwischen Stützbeschlag und Halteteil.

Gemäß einer weiteren Ausgestaltung der erfindungsgemäßen Befestigungsanordnung kann das Halteteil, insbesondere der Adapter, zumindest teilweise aus Kunststoff bestehen. Insbesondere kann es sich dabei um ein Spritzgussteil handeln. Ein solches Halteteil ist für den vorliegenden Anwendungsfall besonders geeignet, da es einerseits besonders stabil ist und andererseits bereits bei der Herstellung, insbesondere beim Spritzgussverfahren, mit einfachen Mitteln eine Form erhalten kann, die ein besonders einfaches Einsetzen, insbesondere ein nachträgliches Einsetzen, in eine Leichtbauplatte gewährleistet. Die Gussform des Kunststoffteils kann so geformt sein, dass die Halteteile, da sie sich beispielsweise nach vorne hin verjüngen, mit geringem Kraftaufwand, beispielsweise auch von Hand, stirnseitig in eine Leichtbauplatte eingesetzt werden können.

Wie bereits erwähnt, kann das mindestens eine Halteteil auch ein Querriegel, insbesondere ein loser Querriegel, sein. Grundsätzlich schließt das Vorhandensein eines Halteteils in Form eines Querriegels nicht das Vorhandensein eines Halteteils in Form eines wie zuvor beschriebenen Adapters aus. Im Gegenteil, als Halteteile können Adapter und Querriegel auch kombiniert sein.

Gemäß wiederum einer weiteren Ausgestaltung besteht die obere Deckplatte, die untere Deckplatte und/oder der jeweilige Querriegel zumindest teilweise aus einem Holzwerkstoff, insbesondere aus Holzspänen und/oder Holzfasern. Die genannten Bauteile können auf übliche Weise unter erhöhtem Druck und erhöhter Temperatur aus mit Bindemittel versehenem, kleinstückigem Holzmaterial gefertigt werden. Solchermaßen hergestellte Bauteile weisen eine hohe Stabilität auf und lassen sich optimal oberflächenbehandeln, insbesondere beschichten.

Gemäß wiederum einer weiteren Ausgestaltung der erfindungsgemäßen Befestigungsanordnung besteht die Mittellage zumindest teilweise aus einem Wabenmaterial, insbesondere einem Kartonwabenmaterial. Ein solches Material weist in vertikaler Richtung, das heißt in Richtung von der oberen Deckplatte zur unteren Deckplatte, eine relativ hohe Stabilität bei einem relativ geringen Gewicht bzw. einer relativ geringen Dichte auf.

Als besonders vorteilhaft hat sich erwiesen, wenn gemäß noch einer weiteren Ausgestaltung der erfindungsgemäßen Befestigungsanordnung mindestens einer der Querriegel an der jeweiligen Schmalseite der Leichtbauplatte bündig mit der Stirnkante der oberen Deckplatte und/oder unter Deckplatte angeordnet ist. Auf diese Weise bildet die Seitenfläche des Querriegels, insbesondere wenn dessen Länge der Breite der Leichtbauplatte entspricht, einen Teil der schmalseitigen Oberfläche der Leichtbauplatte. Durch eine solche Anordnung der Querriegel ist die Leichtbauplatte damit an den Schmalseiten bereits ohne zusätzliche Hilfsmittel, insbesondere ohne zusätzliche Abdeckungen, abgeschlossen und bietet damit eine ebene Oberfläche, die ohne weiteres beschichtet werden kann.

Gemäß noch einer weiteren Ausgestaltung der erfindungsgemäßen Befestigungsanordnung ist mindestens einer der Querriegel zumindest an der zum Stützbeschlag gewandten Längsseite der Leichtbauplatte - die Längsseiten sind die quer zu den Schmalseiten verlaufenden Stirnseiten der Leichtbauplatte -, gegebenenfalls auch an beiden Längsseiten, bündig mit der Stirnkante der oberen Deckplatte und/oder unteren Deckplatte angeordnet. Entsprechendes gilt auch für den Fall, dass das Halteteil ein wie zuvor beschriebener Adapter ist. Dadurch kann der Stützbeschlag, insbesondere das Stützmittel des Stützbeschlags, unmittelbar, das heißt ohne nennenswerten Zwischenraum, an der Stirnseite des jeweiligen Halteteils, insbesondere Querriegels, eingreifen bzw. mit diesem zusammenwirken. Dies führt zu einer besonders hohen Stabilität der montierten Leichtbauplatte. Insbesonders fallen die Ecken der Leichtbauplatte im Falle einer solchen Anordnung eines Querriegels dadurch besonders stabil aus.

Damit das Wandboard bei Verwendung eines beispielsweise plattenförmigen Wandfixierungsmittels bündig an der Wandoberfläche anliegt, ist gemäß noch einer weiteren Ausgestaltung vorgesehen, dass das jeweilige Halteteil stirnseitig eine Vertiefung zur Aufnahme des Wandfixierungsmittels, insbesondere der Platte, aufweist. Auf diese Weise wird auch garantiert, dass der jeweilige Stützbeschlag für den Benutzer nicht sichtbar ist.

Zuvor wurde bereits die Möglichkeit erwähnt, dass ein Wandboard gemäß der vorliegenden Erfindung, zumindest an den sichtbaren Flächen, beschichtet sein kann. Gemäß einer weiteren Ausgestaltung der erfindungsgemäßen Befestigungsanordnung sind der jeweilige Querriegel und die Stirnkanten der oberen Deckplatte und der unteren Deckplatte an der jeweiligen Schmalseite der Leichtbauplatte mit einer durchgängigen Beschichtung, insbesondere einem Schichtstoff und/oder einer Lackierung, versehen. Alternativ oder zusätzlich können Querriegel und Stirnkanten der oberen und unteren Deckplatten auch an der Längsseite der Leichtbauplatte mit einer durchgängigen Beschichtung der zuvor beschriebenen Art versehen sein.

Gemäß noch einer weiteren Ausgestaltung der erfindungsgemäßen Befestigungsanordnung ist die Mittellage der Leichtbauplatte an der dem Stützbeschlag zugewandten Längsseite, also der im montierten Zustand der Wandoberfläche zugewandten Stirnseite, offen. Die Leichtbauplatte kann dadurch ohne weiteres aus einer großformatigen Platte, beispielsweise einem Leichtbauplattenstrang, wie er zuvor bereits erwähnt wurde, hergestellt werden, wobei lediglich an den Schmalseiten nach dem Ablängen die Riegel eingesetzt werden brauchen bzw., wenn anstelle von Riegeln ein oder mehrere Adapter vorgesehen sind, lediglich diese eingesetzt werden brauchen. Nur die von der Wandoberfläche wegweisende Stirnseite der Leichtbauplatte braucht dann im Bedarfsfall noch mit einer Abdeckung und/oder einer Beschichtung verschlossen werden.

Der Stützbeschlag kann zur Verwendung mit der erfindungsgemäßen Befestigungsanordnung auf verschiedene Weise ausgebildet sein. Gemäß einer Ausgestaltung ist das Stützmittel ein Bolzen und/oder das Wandfixierungsmittel eine Platte. Platte und Bolzen können fest oder lösbar miteinander verbunden sein. Auch ist es denkbar, dass Stützmittel und Wandfixierungsmittel zusammen von einem Bolzen gebildet werden, wobei der als Wandfixierungsmittel dienende Teil des Bolzens ein Gewinde zur Verschraubung in der Wand aufweisen kann. Das Wandfixierungsmittel wird dann an entsprechender Stelle an der Wandoberfläche montiert, beispielsweise angeschraubt, so dass das Stützmittel bzw. der Bolzen senkrecht von der Wandoberfläche absteht. Das Wandboard wird dann mit den in den Halteteilen vorgesehenen Aufnahmen auf die Stützmittel bzw. Bolzen aufgeschoben. Damit das Wandboard nicht ohne weiteres wieder von den Stützmitteln bzw. Bolzen abnehmbar ist, ist es vorteilhaft, wenn der Querschnitt der Aufnahme im Halteteil und der Querschnitt des Stützmittels, das heißt insbesondere des Bolzens, so gewählt sind, das heißt so aufeinander abgestimmt sind, dass die Verbindung zwischen Aufnahme und Stützmittel zumindest in vertikaler Richtung spielfrei ist. Insbesondere ist es vorteilhaft, wenn im montierten Zustand, also wenn Aufnahme und Stützmittel zusammenwirken, eine Presspassung vorliegt.

Damit in dem Fall, dass mehrere Stützbeschläge montiert werden müssen, die Leichtbauplatte über die Aufnahmen in den Halteteilen möglichst einfach auf die Stützmittel aufgeschoben werden kann, ist es vorteilhaft, wenn die Aufnahme in dem jeweiligen Halteteil, zumindest bei einem der Halteteile, eine Bohrung mit einem länglichen Querschnitt ist, also einem Querschnitt eines Langloches. So hat zumindest eine der vorgesehenen Verbindungen von Stützmittel und Aufnahme etwas Spiel. Aber auch bei der Verwendung einer Bohrung mit einem länglichen Querschnitt ist es vorteilhaft, wenn in vertikaler Richtung kein Spiel zwischen Aufnahme und Stützmittel vorliegt, das Spiel also nur in horizontaler Richtung erlaubt ist.

Zur Erhöhung der Stabilität beträgt gemäß noch einer weiteren Ausgestaltung der erfindungsgemäßen Befestigungsanordnung die Länge der Aufnahme und/oder die Länge des Stützmittels mindestens ein Fünftel, insbesondere mindestens ein Viertel, vorzugsweise mindestens die Hälfte, der Breite der Leichtbauplatte und/oder der Länge des jeweiligen Querriegels. Weiter hat sich als vorteilhaft erwiesen, wenn die Riegelbreite in einem Bereich von 50 bis 80 mm und insbesondere von 60 bis 70 mm liegt und vorzugsweise 65 mm beträgt.

Es sei abschließend darauf hingewiesen, dass der Stützbeschlag auch nur ein einzelnes Wandfixierungsmittel - z.B. eine einzelne längliche Platte - aufweisen kann und mehrere damit verbundene Stützmittel, insbesondere Bolzen, die mit den entsprechenden Aufnahmen in den Halteteilen, beispielsweise in den Querriegeln, zusammenwirken können.

Die zuvor hergeleitete und aufgezeigte Aufgabe wird ferner gemäß einer zweiten Lehre der vorliegenden Erfindung durch ein Halteteil gemäβ Anspruch 10 für eine Befestigungsanordnung gelöst, das wie der zuvor beschriebene Adapter ausgebildet ist. Ein solches Halteteil vereinfacht die Wandmontage eines Wandboards unter Verwendung einer Leichtbauplatte und kann insbesondere auch auf einfache Weise von Hand, beispielsweise von einem einfach ausgestatteten Schreiner oder auf der Baustelle, eingebracht werden. Gegebenenfalls kann auch mit einfachen Mitteln eine Ausnehmung für ein Halteteil in Form eines solchen Adapters mit einem Fräsaggregat oder einer Langlochbohrmaschine eingebracht werden. Grundsätzlich kann ein solches Halteteil aber auch, wie im Folgenden noch näher beschrieben wird, maschinell in die Leichtbauplatte eingebracht werden. Wie zuvor bereits angedeutet, ist es bevorzugt, wenn das Halteteil vor dem Einsetzen in die Leichtbauplatte, insbesondere am ersten Abschnitt und/oder am zweiten Abschnitt, mit einem aktivierbaren Klebemittel, insbesondere mit mindestens einer Leimperle, einem mikroverkapselten Klebemittel und/oder einem durch Abziehen einer Schutzfolie und/oder Benetzung mit einem Lösungsmittel, beispielsweise Wasser, aktivierbaren Klebemittel, versehen ist.

Die zuvor hergeleitete und aufgezeigte Aufgabe wird schließlich gemäß einer dritten Lehre der vorliegenden Erfindung gelöst durch ein Verfahren zur Herstellung einer Befestigungsanordnung, insbesondere einer Befestigungsanordnung wie sie zuvor beschrieben wurde, bei dem nacheinander die folgenden Schritte durchgeführt werden:
- Bereitstellen eines Stützbeschlags, der ein Wandfixierungsmittel und ein mit dem Wandfixierungsmittel verbundenes Stützmittel aufweist,
- Bereitstellen einer oberen Deckplatte,
- Bereitstellen einer unteren Deckplatte,
- Bereitstellen einer Mittellage,
- Bereitstellen mindestens eines Halteteils, insbesondere von mindestens zwei Halteteilen, wobei das mindestens eine Halteteil vorzugsweise wie zuvor beschrieben ausgebildet ist, insbesondere wie der zuvor beschriebene Adapter,
- Verbinden der oberen Deckplatte, der unteren Deckplatte und der Mittellage zu einem großformatigen, gegebenenfalls endlosen, Leichtbauplattenstrang,
- Erzeugen einer Leichtbauplatte durch Verpressen und insbesondere Ablängen des Leichtbauplattenstranges, wobei die Leichtbauplatte eine erste Schmalseite und eine zweite Schmalseite erhält, und
- Einsetzen des mindestens einen Halteteils in die Leichtbauplatte, wobei das jeweilige Halteteil nach dem Einsetzen stirnseitig mit einer Aufnahme für das Stützmittel versehen ist.

vorteilhaft ist, dass zunächst auf einfache Weise eine großformatige Leichtbauplatte, insbesondere ein Leichtbauplattenstrang, der vorzugsweise endlos ist, hergestellt wird, indem die beiden Deckplatten und die Mittellage miteinander verklebt und verpresst werden. Anschließend können Leichtbauplatten durch Ablängen auf die gewünschte Länge gebracht und an den Schmalseiten mit Querriegeln versehen werden. Anstelle von Querriegeln oder zusätzlich dazu kann wie bereits zuvor beschrieben auch ein Adapter als Halteteil vorgesehen werden. Dabei kann das jeweilige Halteteil bereits zuvor mit einer Aufnahme für das Stützmittel versehen worden sein oder erst nach dem Einsetzen in die Leichtbauplatte mit einer solchen Aufnahme versehen werden. Die so hergestellte Leichtbauplatte muss dann lediglich, so dies gewünscht ist, an der die spätere Vorderseite bildenden Schmalseite verschlossen werden und kann anschließend an allen sichtbaren Seiten beschichtet werden. Die zur späteren Wandoberfläche gerichtete rückseitige Stirnfläche kann unbehandelt, insbesondere unverschlossen bzw. unbeschichtet sein.

Grundsätzlich kann zunächst auch eine vollständig beschichtete und gegebenenfalls an der Vorderseite geschlossene Leichtbauplatte hergestellt werden, in die dann in einem nachfolgenden Bearbeitungsschritt von der rückseitigen Stirnfläche her der bzw. die Adapter als Halteteile eingesetzt werden.

Die zuvor beschriebene Befestigungsanordnung bzw. das beschriebene Herstellungsverfahren ist nicht auf die Anwendung von rechteckigen Wandboards beschränkt, sondern erlaubt nahezu beliebige Freiformen der Boards.

Bei Boardlängen bis 1000 mm hat es sich als ausreichend erwiesen, lediglich an den Schmalseiten der Leichtbauplatte, wenn überhaupt, maximal einen Querriegel mit entsprechender stirnseitiger Aufnahme vorzusehen. Bei größeren Boardlängen kann zusätzlich mindestens ein Querriegel im Bereich zwischen den schmalseitigen Querriegeln vorgesehen sein.

In dem Fall, dass als Halteteil ein Adapter in die Leichtbauplatte eingesetzt wird, wird dieser gemäß einer Nicht erfindungsgemäβen Ausgestaltung des erfindungsgemäßen Verfahrens klebemittelfrei mit der Leichtbauplatte verbunden. Eine solche Montage eines Adapters kann einerseits auf einfache Weise von Hand durchgeführt werden und führt andererseits gegenüber einem Verkleben zu einem deutlichen Zeitgewinn bei der Herstellung. Dabei kann vor dem Einsetzen des Adapters bzw. Halteteils eine Aussparung in die Mittellage und/oder eine Ausnehmung in die obere Deckplatte und/oder die untere Deckplatte eingebracht werden, insbesondere durch Fräsen und/oder Bohren. Dies ist aber nicht unbedingt notwendig und kann insbesondere beim Einsetzen des oder der Adapter von Hand auch entfallen. Insbesondere ist das Vorsehen einer Aussparung in der Mittellage dann nicht erforderlich, wenn das Halteteil in Form des beschriebenen Adapters zum vorderen Ende hin spitz zuläuft, das heißt sich zu diesem Ende hin verjüngt.

Gemäß noch einer weiteren Ausgestaltung des erfindungsgemäßen Verfahrens wird das Halteteil maschinell, insbesondere in einer automatisierten Fertigungslinie, in die Leichtbauplatte eingesetzt. Vorzugsweise kann es sich dabei um ein kontinuierliches Produktionsverfahren handeln, bei dem beispielsweise unmittelbar nach dem Verpressen oder auch schon während des Verpressens der einzelnen Lagen des Leichtbauplattenstrangs die Halteteile, insbesondere die Adapter, von einer Stirnseite her in die Leichtbauplatte eingesetzt werden.

Es gibt nun eine Vielzahl von Möglichkeiten, die erfindungsgemäße Befestigungsanordnung, das Halteteil und das Herstellungsverfahren auszugestalten und weiterzubilden. Hierzu sei einerseits verwiesen auf die dem Patentanspruch 1 nachgeordneten Patentansprüche, andererseits auf die Beschreibung eines Ausführungsbeispiels in Verbindung mit der Zeichnung. In der Zeichnung zeigt:
- Fig. 1a): eine perspektivische Ansicht eines Wandboards,
- Fig. 1b): eine Detailansicht des Wandboards aus Fig. 1a),
- Fig. 1c): einen Stützbeschlag für das Wandboard aus Fig. 1a),
- Fig. 2a): eine perspektivische Ansicht eines ersten Ausführungsbeispiels eines adapterförmigen Halteteils,
- Fig. 2b): eine perspektivische Ansicht eines zweiten Ausführungsbeispiels eines adapterförmigen Halteteils,
- Fig. 2c): eine perspektivische Ansicht eines dritten Ausführungsbeispiels eines adapterförmigen Halteteils,
- Fig. 3a): eine Vorderansicht eines Wandboards mit einem Halteteil gemäß Fig. 2,
- Fig. 3b): eine vertikale Schnittansicht des Wandboards aus Fig. 3a)
- Fig. 3c): eine horizontale Schnittansicht des Wandboards aus Fig. 3a),
- Fig. 4a): eine Vorderansicht eines Wandboards mit einem alternativen Halteteil,
- Fig. 4b): eine vertikale Schnittansicht des Wandboards aus Fig. 4a) und
- Fig. 4c): eine horizontale Schnittansicht des Wandboards aus Fig. 4a).

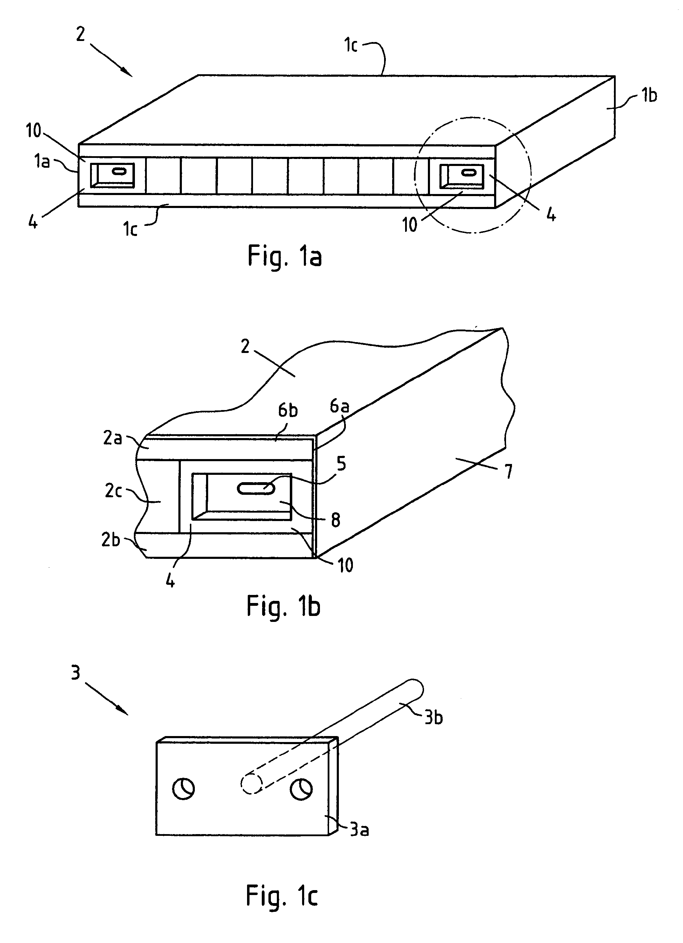

In den Figuren 1a) bis c) ist eine Befestigungsanordnung zur Montage eines Wandboards an einer Wandoberfläche unter Verwendung einer Leichtbauplatte 2 und eines Stützbeschlags 3 dargestellt. Die Figuren 1a) und 1b) zeigen dabei die Leichtbauplatte 2 der Befestigungsanordnung und Fig. 1c) den Stützbeschlag 3 der Befestigungsanordnung.

Die Leichtbauplatte 2 erstreckt sich, wie Fig. 1a) zeigt, von einer ersten Schmalseite 1a zu einer zweiten Schmalseite 1b in eine Längsrichtung und weist eine obere Deckplatte 2a, eine untere Deckplatte 2b und eine dazwischen angeordnete leichte Mittellage 2c auf. Die Deckplatten 2a und 2b bestehen aus einer Spanplatte oder OSB-Platte und die Mittellage aus einer Kartonwabenstruktur.

An den beiden Schmalseiten 1a und 1b ist jeweils als Halteteil 4 ein Querriegel 10 quer zur Längsrichtung in die Mittellage 2c integriert und mit den beiden Deckplatten 2a und 2b verklebt. Der jeweilige Querriegel 10 ist mit einer stirnseitigen Aufnahme 5 für ein Stützmittel 3b eines Stützbeschlags 3, wie er in Fig. 1c) gezeigt ist, versehen.

Der Stützbeschlag 3 weist ferner ein Wandfixierungsmittel 3a auf, an dem das Stützmittel 3b befestigt ist. Im dargestellten Ausführungsbeispiel einer Befestigungsanordnung ist in Fig. 1c) ein Stützbeschlag 3 dargestellt, bei dem das Wandfixierungsmittel 3a als Platte und das Stützmittel 3b als Bolzen ausgeführt ist.

Die Leichtbauplatte 2 ist ferner frei von sonstigen Riegeln, insbesondere frei von Längsriegeln. Die einzigen Riegel sind die Querriegel 10, die so angeordnet sind, dass sie einen seitlichen Abschluss der Leichtbauplatte 2 bilden. Die Querriegel 10 sind bündig mit der jeweiligen Stirnkante 6a der oberen Deckplatte 2a und der unteren Deckplatte 2b angeordnet. In diesem Bereich der Schmalseiten 1a und 1b ist auch eine gemeinsame Beschichtung 7 vorgesehen, die über die Stirnkanten 6a und den Querriegel 10 verläuft. Auch oberseitig und unterseitig ist eine Beschichtung 7 vorgesehen.

Die Querriegel 10 sind ferner, wie Fig. 1b zeigt, an der vom Stützbeschlag 3 abgewandten Längsseite 1c der Leichtbauplatte 2 bündig mit der Stirnkante 6b der oberen Deckplatte 2a und unteren Deckplatte 2b angeordnet.

Der Querriegel 10 ist stirnseitig mit einer Vertiefung 8 zur Aufnahme des plattenförmigen Wandfixierungsmittels 3a versehen.

Ferner ist vorgesehen, dass die Aufnahme 5 eine Bohrung mit einem länglichen Querschnitt ist, wodurch Montagetoleranzen ausgeglichen werden können. Der Querschnitt des Langloches 5 erstreckt sich dabei in horizontaler Richtung, das heißt in Längsrichtung der Leichtbauplatte 2, wobei das Langloch 5 in vertikaler Richtung eine solche Abmessung hat, die dem Durchmesser des bolzenförmigen Stützmittels 3b entspricht, so dass die Verbindung zwischen Aufnahme 5 und Stützmittel 3b in vertikaler Richtung spielfrei ist.

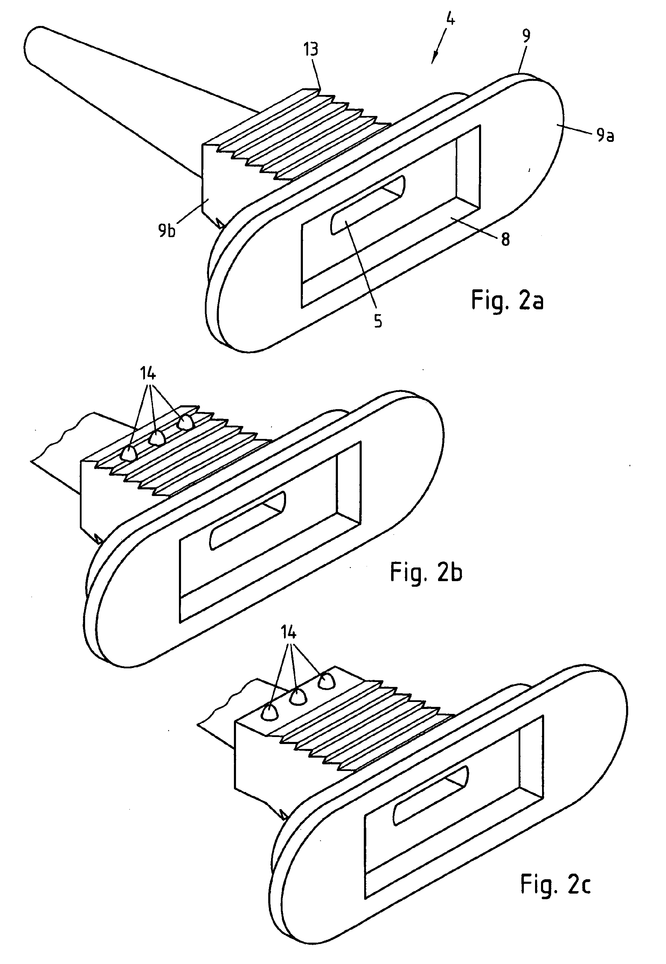

In Fig. 2a) ist in einer perspektivischen Ansicht ein Halteteil 4 in Form eines Adapters 9 dargestellt, der anstelle eines wie zuvor beschriebenen Querriegels 10 eingesetzt werden kann. Grundsätzlich kann ein solcher Adapter 9 auch in Kombination mit Querriegeln verwendet werden.

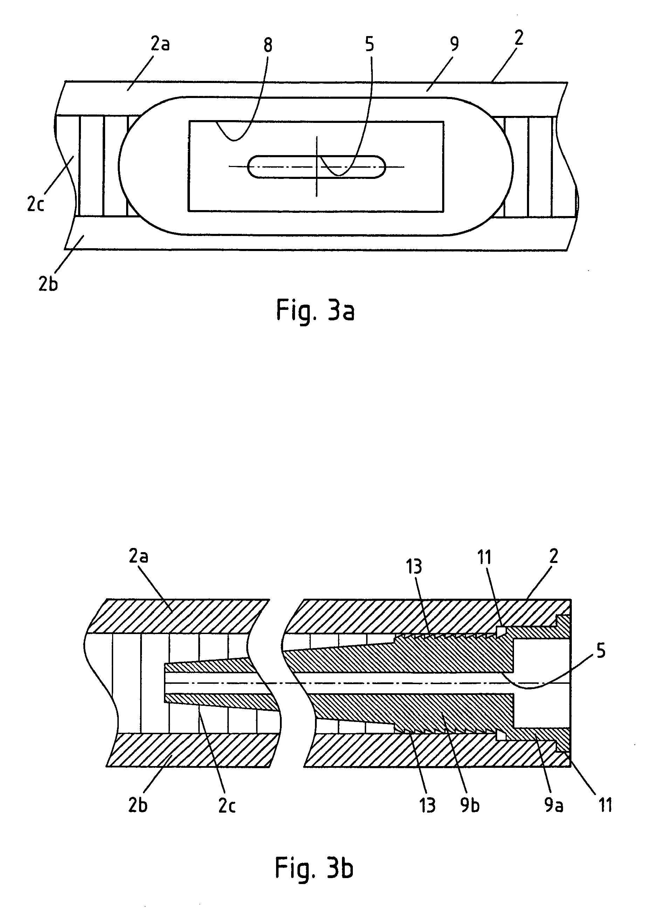

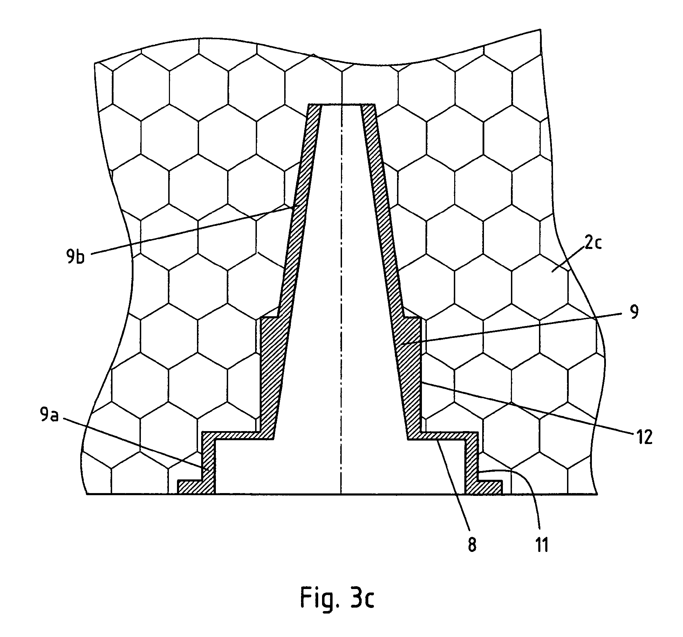

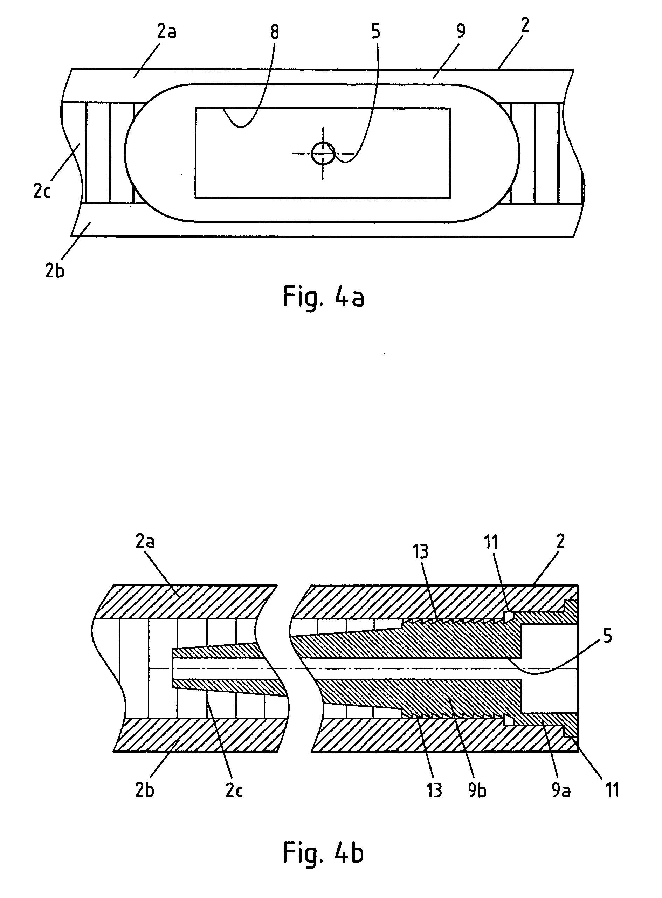

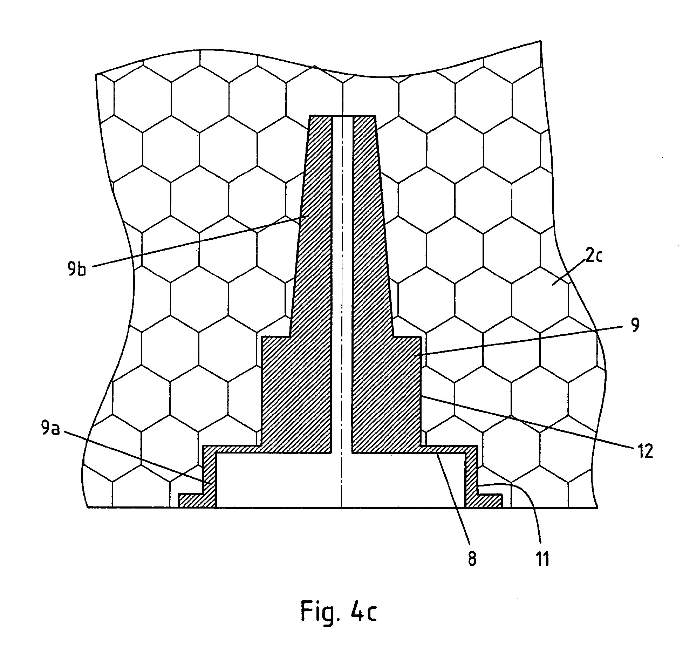

Der Adapter 9 weist einen ersten Abschnitt 9a mit einem größeren Querschnitt und einen sich daran anschließenden zweiteiligen zweiten Abschnitt 9b mit einem kleineren Querschnitt auf. Der erste Abschnitt 9a und der zweite Abschnitt 9b können klebemittelfrei mit der Leichtbauplatte 2, wie die Figuren 3 und 4 zeigen, verbunden werden.

Der zweite Abschnitt 9b, der im vorliegenden Fall zweiteilig ausgebildet ist, ist an der im bestimmungsgemäß eingebauten Zustand zur oberen Deckplatte und zur unteren Deckplatte weisenden Seite mit Vorsprüngen 13 in Form von quer zur Einschubrichtung verlaufenden Rippen versehen, die einen entgegen der Einschubrichtung geneigten zahnförmigen Querschnitt haben. Die im eingebauten Zustand zur Mittellage weisenden Seiten weisen in diesem Fall keine Vorsprünge 13 auf. Ausgehend von der breiten Aufnahme 5 verjüngt sich der gesamte zweite Abschnitt 9b innen.

An diesen mit den Vorsprüngen 13 versehenen Teil des zweiten Abschnitts 9b schließt sich ein weiterer Teil an, der sich zum vorderen Ende hin auch außen verjüngt. Dies wird besonders in den Figuren 3 und 4 deutlich. Der sich verjüngende Teil des zweiten Abschnitts 9b ermöglicht eine optimale Aufnahme und Lagerung des Stützmittels 3b eines Stützbeschlags 3, wie er beispielhaft in Fig. 1c) dargestellt ist. Auch kann der Adapter 9, da er sich zu seinem vorderen Ende hin außen verjüngt, das heißt spitz zuläuft, auf einfache Weise von Hand in das Material der Mittellage 2c eingebracht werden.

Wie auch der in den Figuren 1a) und b) gezeigte Querriegel 10 weist auch der Adapter 9 in seinem ersten Abschnitt 9a eine stirnseitige Vertiefung 8 auf, die zur Aufnahme des Wandfixierungsmittels 3a eines Stützbeschlags 3 dient, wie er beispielhaft in Fig. 1c) dargestellt ist.

Schließlich ist die stirnseitige Aufnahme 5 bei dem in den Figuren 2 und 3 dargestellten Halteteil 4 mit einem länglichen Querschnitt versehen, also einem Querschnitt, der die Form eines Langlochs hat.

In den Figuren 2b) und c) sind weitere Ausführungsbeispiele eines erfindungsgemäßen Adapters 9 dargestellt, wobei hier im Unterschied zu dem Ausführungsbeispiel in Fig. 2a) in dem Bereich des zweiten Abschnitts 9b, der den größeren Querschnitt hat, zusätzlich zu den Vorsprüngen 13 noch in zugeordneten Vertiefungen befindliche Leimperlen 14 angeordnet sind. Die Leimperlen 14 sind sowohl an der Oberseite als auch der Unterseite des Adapters 9 vorgesehen und ragen aus dem Adapter 9 soweit hervor, dass beim Einsetzen des Adapters 9 in die Leichtbauplatte 2 die Leimperlen 14 abgeschert werden, wodurch sich das Klebemittel aus dem Innern der Leimperlen 14 im Bereich zwischen den Vorsprüngen 13 und der Innenseite der jeweils gegenüberliegenden Deckplatte verteilt. Auf diese Weise wird eine Verbindung zwischen Adapter 9 und Leichtbauplatte 2 hergestellt, die sowohl kraftschlüssig (durch die Vorsprünge 13) als auch stoffschlüssig (durch das Klebemittel der Leimperlen 14) ist.

In den Figuren 2b) und c) sind die Leimperlen im zweiten Abschnitt 9b, und zwar in einem Teilabschnitt des Abschnitts 9b, der gegenüber dem übrigen Teil des zweiten Abschnitts 9b einen größeren Querschnitt hat, angeordnet. Dieser Teilabschnitt mit dem größeren Querschnitt ist, wie auch bei dem Ausführungsbeispiel in Fig. 2a), an seiner Oberseite und an seiner Unterseite, die also im eingebauten Zustand den Innenseiten der jeweiligen gegenüberliegenden Deckplatte zugekehrt sind, mit den Vorsprüngen 13 für den Kraftschluss versehen. In Fig. 2b) sind dabei die Vorsprünge 13 über den gesamten Teilabschnitt mit dem größeren Querschnitt verteilt, wohingegen gemäß Fig. 2c) am vorderen Ende (bezogen auf die Einschubrichtung des Adapters 9) des Teilsabschnitts mit dem größeren Durchmesser ein Bereich ohne Vorsprünge vorgesehen ist. Die Leimperlen 14 sind gemäß Fig. 2b) im Bereich der Vorsprünge 13 und gemäß Fig. 2c) in dem Bereich, der frei von Vorsprüngen ist, angeordnet. Sobald der Adapter 9 in die Leichtbauplatte 2 eingesetzt bzw. eingeschoben wird, wird der obere Teil der Leimperlen 14, der aus den (nicht dargestellten) zugeordneten Vertiefungen im Adapter 9 herausragt, abgeschert und der in den Leimperlen 14 befindliche Leim über den Bereich mit den Vorsprüngen 13 verteilt. Nach dem Aushärten bildet der Leim einen Stoffschluss zwischen dem Adapter 9 und den Deckplatten der Leichtbauplatte 2.

Fig. 3a) bis c) zeigt den bestimmungsgemäß eingesetzten Zustand, bei dem der Adapter 9 von der Stirnseite der Leichtbauplatte 2 her in diese eingesetzt ist.

Wie Fig. 3b) zeigt, wirkt der erste Abschnitt 9a mit der oberen Deckplatte 2a und der unteren Deckplatte 2b, und zwar mit einer abgestuften Ausnehmung 11 in der oberen und unteren Deckplatte mit einem langlochförmigen Querschnitt, formschlüssig zusammen. Der zweite Abschnitt 9b wirkt mit dem die Vorsprünge 13 aufweisenden Teil mit der oberen und der unteren Deckplatte kraftschlüssig zusammen. Der sich verjüngende Teil des zweiten Abschnitts 9b ist in diesem Ausführungsbeispiel nicht mit den Deckplatten in Kontakt, sondern dient nur zur Aufnahme des Stützmittels 3b eines Stützbeschlags 3.

Der schließlich in den Figuren 4a) bis c) gezeigte Adapter 9 entspricht weitestgehend dem in den Figuren 3a) bis c) gezeigten Adapter 9, mit dem Unterschied, dass die Ausnehmung 5 einen kreisförmigen Querschnitt hat.

## Patentansprüche

1. Befestigungsanordnung zur Montage eines Wandboards an einer Wandoberfläche
- mit einer sich von einer ersten Schmalseite (1a) zu einer zweiten Schmalseite (1b) in Längsrichtung erstreckenden Leichtbauplatte (2), die eine obere Deckplatte (2a), eine untere Deckplatte (2b) und eine dazwischen angeordnete leichte Mittellage (2c) aufweist, und
- mit mindestens einem Stützbeschlag (3), der ein Wandfixierungsmittel (3a) und ein mit dem Wandfixierungsmittel (3a) verbundenes Stützmittel (3b) aufweist,
- wobei mindestens ein Halteteil (4) quer zur Längsrichtung in die Mittellage (2c) integriert ist,
- wobei das mindestens eine Halteteil (4) mit einer stirnseitigen Aufnahme (5) für das Stützmittel (3b) versehen ist,
- wobei das mindestens eine Halteteil (4) ein Adapter (9) ist, der einen ersten Abschnitt (9a) mit einem größeren Querschnitt und einen sich daran anschließenden zweiten Abschnitt (9b) mit einem kleineren Querschnitt hat,
- wobei der Adapter (9) mittels Stoffschluss mit der Leichtbauplatte (2) verbunden ist,
**dadurch gekennzeichnet, dass** der Stoffschluss durch ein mit dem Adapter (9) verbundenes Klebemittel erreicht wird, dass das Klebemittel ein aktivierbares Klebemittel ist und dass das Klebemittel so ausgebildet ist, dass es durch den Vorgang des Einsetzens des Adapters (9) in die Leichtbauplatte (2) aktivierbar ist.

2. Befestigungsanordnung nach Anspruch 1, **dadurch gekennzeichnet, dass** das aktivierbare Klebemittel in Form mindestens einer Leimperle oder eines mikroverkapselten Klebemittels auf dem Adapter (9), insbesondere dem ersten Abschnitt (9a) und/oder dem zweiten Abschnitt (9b), appliziert ist.

3. Befestigungsanordnung nach Anspruch 1 oder 2, **dadurch gekennzeichnet, dass** die mindestens eine Leimperle in einer Vertiefung des Adapters (9), insbesondere des ersten Abschnitts (9a) und/oder des zweiten Abschnitts (9b), angeordnet ist, wobei die Tiefe der Vertiefung vorzugsweise kleiner als die Länge der mindestens einen Leimperle ist und/oder wobei die mindestens eine Leimperle in die jeweilige Vertiefung nur so tief eingesetzt ist, dass ein Teil der mindestens einen Leimperle aus der Vertiefung herausragt.

4. Befestigungsanordnung nach einem der vorangehenden Ansprüche, **dadurch gekennzeichnet, dass** der Adapter (9), insbesondere der erste Abschnitt (9a) und/oder der zweite Abschnitt (9b), mittels Kraftschluss mit der Leichtbauplatte (2) verbunden ist, wobei insbesondere der Kraftschluss durch außenseitige Vorsprünge (13) am Adapter (9), die mit der Leichtbauplatte (2), insbesondere der oberen Deckplatte (2a) und/oder der unteren Deckplatte (2b), zusammenwirken, erreicht wird.

5. Befestigungsanordnung nach Anspruch 4, **dadurch gekennzeichnet, dass** der erste Abschnitt (9a) oder der zweite Abschnitt (9b) des Adapters (9) klebemittelfrei mit der Leichtbauplatte (2) verbunden ist.

6. Befestigungsanordnung nach einem der vorangehenden Ansprüche, **dadurch gekennzeichnet, dass** der erste Abschnitt (9a) mit der oberen Deckplatte (2a) und der unteren Deckplatte (2b), insbesondere mit mindestens einer Ausnehmung (11) in der oberen Deckplatte (2a) und/oder der unteren Deckplatte (2b), haltend zusammenwirkt.

7. Befestigungsanordnung nach einem der vorangehenden, **dadurch gekennzeichnet, dass** der zweite Abschnitt (9b) zumindest über einen Teil seiner Länge, insbesondere über den Teilabschnitt, der gegenüber dem übrigen Teil des zweiten Abschnitts (9b) den größeren Querschnitt hat, mit der oberen Deckplatte (2a) und der unteren Deckplatte (2b) haltend zusammenwirkt, wobei insbesondere der zweite Abschnitt (9b) zumindest über einen Teil seiner Länge, insbesondere über den Teilabschnitt, der gegenüber dem übrigen Teil des zweiten Abschnitts (9b) den größeren Querschnitt hat, vorzugsweise an der zur oberen Deckplatte (2a) und/oder unteren Deckplatte (2b) weisenden Seite, mit den Vorsprüngen (13) versehen ist.

8. Befestigungsanordnung nach Anspruch 4 oder 5, **dadurch gekennzeichnet, dass** die Vorsprünge (13) von vorzugsweise quer zur Einschubrichtung verlaufenden Rippen gebildet werden, die insbesondere einen zahnförmigen Querschnitt haben, der vorzugsweise entgegen der Einschubrichtung geneigt ist.

9. Befestigungsanordnung nach einem der vorangehenden Ansprüche, **dadurch gekennzeichnet, dass** die Leichtbauplatte (2) frei von sich in Längsrichtung und/oder in Querrichtung erstreckenden Riegeln ist.

10. Halteteil (4) für eine Befestigungsanordnung nach einem der vorangehenden Ansprüche, **dadurch gekennzeichnet, dass** es ein Adapter (9) ist, dass der Adapter (9) vor dem Einsetzen in die Leichtbauplatte (2) mit einem aktivierbaren Klebemittel versehen ist und dass das Klebemittel so ausgebildet ist, dass es durch den Vorgang des Einsetzens des Adapters (9) in die Leichtbauplatte (2) aktivierbar ist.

11. Halteteil (4) nach Anspruch 10, **dadurch gekennzeichnet, dass** es vor dem Einsetzen in die Leichtbauplatte (2) am ersten Abschnitt (9a) und/oder am zweiten Abschnitt (9b) des Adapters (9) mit dem aktivierbaren Klebemittel, insbesondere mit mindestens einer Leimperle oder einem mikroverkapselten Klebemittel, versehen ist.

12. Verfahren zur Herstellung einer Befestigungsanordnung nach einem der Ansprüche 1 bis 9, bei dem nacheinander die folgenden Schritte durchgeführt werden:
- Bereitstellen eines Stützbeschlags (3), der ein Wandfixierungsmittel (3a) und ein mit dem Wandfixierungsmittel (3a) verbundenes Stützmittel (3b) aufweist,
- Bereitstellen einer oberen Deckplatte (2a),
- Bereitstellen einer unteren Deckplatte (2b),
- Bereitstellen einer Mittellage (2c),
- Bereitstellen mindestens eines Halteteils (4), insbesondere von mindestens zwei Halteteilen (4), wobei das mindestens eine Halteteil nach Anspruch 10 oder 11 ausgebildet ist,
- Verbinden der oberen Deckplatte (2a), der unteren Deckplatte (2b) und der Mittellage (2c) zu einem großformatigen Leichtbauplattenstrang,
- Erzeugen einer Leichtbauplatte (2) durch Verpressen und insbesondere Ablängen des Leichtbauplattenstranges, wobei die Leichtbauplatte (2) eine erste Schmalseite (1a) und eine zweite Schmalseite (1b) erhält, und
- Einsetzen des mindestens einen Halteteils (4) in die Leichtbauplatte (2), wobei das jeweilige Halteteil (4) nach dem Einsetzen stirnseitig mit einer Aufnahme (5) für das Stützmittel (3b) versehen ist.

13. Verfahren nach Anspruch 12, **dadurch gekennzeichnet, dass** vor dem Einsetzen des Halteteils (4) eine Aussparung (12) in die Mittellage (2c) und/oder eine Ausnehmung (11) in die obere Deckplatte (2a) und/oder die untere Deckplatte (2b) eingebracht wird, insbesondere durch Fräsen und/oder Bohren.

14. Verfahren nach Anspruch 12 oder 13, **dadurch gekennzeichnet, dass** die stirnseitige Aufnahme (5) im jeweiligen Halteteil (4) nach dem Einsetzen des Halteteils (4) in die Leichtbauplatte (2) vorgesehen wird.

15. Verfahren nach einem der Ansprüche 12 bis 14, **dadurch gekennzeichnet, dass** das Halteteil (4) maschinell, insbesondere in einer automatisierten Fertigungslinie, vorzugsweise in einem kontinuierlichen Produktionsverfahren, in die Leichtbauplatte (2) eingesetzt wird.

## Claims

1. A fastening arrangement for mounting a wall shelf on a wall surface
- with a lightweight board (2) extending from a first narrow side (1a) to a second narrow side (1b) in the longitudinal direction, comprising an upper cover board (2b), a lower cover board (2b), and light middle layer (2c) arranged therebetween, and
- with at least one supporting hardware (3) comprising a wall mounting means (3a) and a supporting means (3b) connected to the wall mounting means (3a),
- wherein at least one retaining means (4) is integrated in the middle layer (2c) transverse to longitudinal direction,
- wherein the at least one retaining part (4) is provided with a front-side receptacle (5) for the supporting means (3b),
- wherein the at least one retaining part (4) is an adaptor (9) that has a first section (9a) with a larger cross-section and, connected thereto, a second section (9b) that has a smaller cross-section,
- wherein the adaptor (9) is connected to the lightweight board (2) by means of an adhesive bond,
**characterized in that** the adhesive bond is achieved by means of an adhesive that is bonded with the adaptor (9), that the adhesive is an activatable adhesive, and that the adhesive is configured in such a manner that it can be activated by the process of inserting the adaptor (9) into the lightweight board (2).

2. The fastening arrangement according to claim 1, **characterized in that** the activatable adhesive is applied in the form of at least one bead of glue or a micro-encapsulated adhesive onto the adaptor (9), in particular onto the first section (9a) and/or the second section (9b).

3. The fastening arrangement according to claim 1 or 2, **characterized in that** the at least one bead of glue is arranged in an indentation of the adaptor (9), in particular the first section (9a) and/or the second section (9b) thereof, wherein the depth of the indentation is preferably smaller than the length of the at least one bead of glue, and/or wherein the at least one bead of glue is inserted in the respective indentation only so deep that a portion of the at least one bead of glue protrudes out of the indentation.

4. The fastening arrangement according to any one of the preceding claims, **characterized in that** the adaptor (9), in particular the first section (9a) and/or the second section (9b), is connected to the lightweight board (2) by means of a nonpositive connection, wherein the nonpositive connection is in particular achieved by exterior projections (13) on the adaptor (9), which projections interact with the lightweight board (2), in particular the upper cover board (2a) and/or the lower cover board (2b).

5. The fastening arrangement according to claim 4, **characterized in that** the first section (9a) or the second section (9b) of the adaptor (9) is connected to the lightweight board (2) in an adhesive-free manner.

6. The fastening arrangement according to any one of the preceding claims, **characterized in that** the first section (9a) interacts in a retaining manner with the upper cover board (2a) and the lower cover board (2b), in particular with at least one recess (11) in the upper cover board (2a) and/or the lower cover board (2b).

7. The fastening arrangement according to any one of the preceding claims, **characterized in that** the second section (9b), at least over a portion of its length, in particular over the partial section that has the larger cross-section with respect to the remaining portion of the second section (9b), interacts in a retaining manner with the upper cover board (2a) and the lower cover board (2b), wherein in particular the second section (9b), at least over a portion of its length, in particular over the partial section that has the larger cross-section with respect to the remaining portion of the second section (9b), is preferably provided with said projections (13) on the side that faces toward the upper cover board (2a) and/or the lower cover board (2b).

8. The fastening arrangement according to claim 4 or 5, **characterized in that** the projections (13) are formed by ribs which preferably run transverse to the insertion direction and which, in particular, have a tooth-shaped cross-section that is preferably inclined counter to the insertion direction.

9. The fastening arrangement according to any one of the preceding claims, **characterized in that** the lightweight board (2) is free of crossbars extending in the longitudinal direction and/or the transverse direction.

10. A retaining part (4) for a fastening arrangement according to any one of the preceding claims, **characterized in that** said retaining part is an adaptor (9), that prior to being inserted into the lightweight board (2), said adaptor (9) is provided with an activatable adhesive, and that the adhesive is configured in such a manner that it can be activated by the process of inserting the adaptor (9) into the lightweight board (2).

11. The retaining part (4) according to claim 10, **characterized in that** prior to being inserted into the lightweight board (2), said retaining part is provided on the first section (9a) and/or on the second section (9b) of the adaptor (9) with the activatable adhesive, in particular with at least one bead of glue or a micro-encapsulated adhesive.

12. A method for producing a fastening arrangement according to any one of the claim 1 to 9, wherein successively the following steps are carried out:
- providing a supporting hardware (3) comprising a wall mounting means (3a) and a supporting means (3b) connected to said wall mounting means (3a),
- providing an upper cover board (2a),
- providing a lower cover board (2b),
- providing a middle layer (2c),
- providing at least one retaining part (4), in particular at least two retaining parts (4), wherein the at least one retaining part is formed according to claim 10 or 11,
- connecting the upper cover board (2a), the lower cover plate (2b) and the middle layer (2c) so as to form a large-scale lightweight board string,
- producing a lightweight board (2) by pressing and in particular by cutting the lightweight board to length, wherein the lightweight board (2) obtains a first narrow side (1a) and a second narrow side (2b), and
- inserting the at least one retaining part (4) into the lightweight board (2), wherein after inserting, the respective retaining part (4) is provided on the front side with a receptacle (5) for the supporting means (3b).

13. The method according to claim 12, **characterized in that** prior to inserting the retaining part (4), a cut-out (12) is incorporated into the middle layer (2c) and/or a recess (11) is incorporated into the upper cover board (2a) and/or the lower cover board (2b), in particular by milling and/or drilling.

14. The method according to claim 12 or 13, **characterized in that** the front-side receptacle (5) in the respective retaining part (4) is provided after inserting the retaining part (4) into the lightweight board (2).

15. The method according to any one of the claims 12 to 14, **characterized in that** the retaining part (4) is inserted into the lightweight board (2) by machine, in particular in an automated production line, preferably using a continuous production method.

## Revendications

1. Système de fixation pour le montage d'un panneau mural sur la surface d'un mur,
- avec un panneau alvéolaire (2) s'étendant dans le sens longitudinal, d'un premier côté étroit (1a) vers un deuxième côté étroit (1b), comportant un panneau de couverture supérieur (2a), un panneau de couverture inférieur (2b) et une couche intermédiaire (2c) légère agencée entre ceux-ci, et
- avec au moins une ferrure de support (3) comportant un moyen de fixation murale (3a) et un moyen de support (3b) relié au moyen de fixation murale (3a),
- dans lequel au moins une pièce de maintien (4) est intégrée dans la couche intermédiaire (2c), transversalement au sens longitudinal,
- dans lequel l'au moins une pièce de maintien (4) est pourvu d'une admission (5) du côté frontal, pour le moyen de support (3b),
- dans lequel l'au moins une pièce de maintien (4) est un adaptateur (9) possédant une première portion (9a) avec une section transversale plus grande et une deuxième portion (9b), raccordée à la première portion, avec une section transversale plus petite,
- dans lequel l'adaptateur (9) est relié au panneau alvéolaire (2) par adhérence de matière,
**caractérisé en ce que** l'assemblage par adhérence de matière est réalisé à l'aide d'un agent adhésif appliqué sur l'adaptateur (9), **en ce que** l'agent adhésif est un agent adhésif activable, et **en ce que** l'agent adhésif est conçue de manière à pouvoir être activé par le procédé d'insertion de l'adaptateur (9) dans le panneau alvéolaire (2).

2. Système de fixation selon la revendication 1, **caractérisé en ce que** l'agent adhésif activable est appliqué sur l'adaptateur (9), en particulier sur la première portion (9a) et/ou la deuxième portion (9b), sous la forme d'au moins une perle de colle ou d'un agent adhésif micro-encapsulé.

3. Système de fixation selon la revendication 1 ou 2, **caractérisé en ce que** l'au moins une perle de colle est disposée dans un creux de l'adaptateur (9), en particulier de la première portion (9a) et/ou de la deuxième portion (9b), dans lequel la profondeur du creux est de préférence inférieure à la longueur de l'au moins une perle de colle, et/ou dans lequel l'au moins une perle de colle est insérée seulement à une telle profondeur dans chacun des creux, qu'une partie de l'au moins une perle de colle dépasse hors du creux.

4. Système de fixation selon l'une des revendications précédentes, **caractérisé en ce que** l'adaptateur (9), en particulier la première portion (9a) et/ou la deuxième portion (9b), est relié au panneau alvéolaire (2) par blocage, l'assemblage par blocage étant réalisé en particulier par des saillies extérieures (13) situées l'adaptateur (9) et coopérant avec le panneau alvéolaire (2), en particulier avec le panneau de couverture supérieur (2a) et/ou le panneau de couverture inférieur (2b).

5. Système de fixation selon la revendication 4, **caractérisé en ce que** la première portion (9a) ou la deuxième portion (9b) de l'adaptateur (9) est reliée au panneau alvéolaire (2) sans agent adhésif.

6. Système de fixation selon l'une des revendications précédentes, **caractérisé en ce que** la première portion (9a) coopère par maintien avec le panneau de couverture supérieur (2a) et le panneau de couverture inférieur (2b), en particulier avec au moins un évidement (11) dans le panneau de couverture supérieur (2a) et/ou le panneau de couverture inférieur (2b).

7. Système de fixation selon l'une des revendications précédentes, **caractérisé en ce que** la deuxième portion (9b) coopère par maintien avec le panneau de couverture supérieur (2a) et le panneau de couverture inférieur (2b), sur au moins une partie de sa longueur, en particulier sur la partie de portion présentant la section transversale plus grande par rapport au reste de la deuxième portion (9b), dans lequel la deuxième portion (9b) est en particulier pourvue de saillies (13), sur au moins une partie de sa longueur, en particulier sur la partie de portion présentant la section transversale plus grande par rapport au reste de la deuxième portion (9b), de préférence du côté tourné vers le panneau de couverture supérieur (2a) et/ou vers le panneau de couverture inférieur (2b).

8. Système de fixation selon la revendication 4 ou 5, **caractérisé en ce que** les saillies (13) sont formées par des nervures s'étendant de préférence transversalement à la direction d'insertion et présentant en particulier une section transversale en forme de dent, de préférence inclinée vers l'opposé de la direction d'insertion.

9. Système de fixation selon l'une des revendications précédentes, **caractérisé en ce que** le panneau alvéolaire (2) est exempt de taquets s'étendant dans le sens longitudinal et/ou dans le sens transversal.

10. Pièce de maintien (4) pour un système de fixation selon l'une des revendications précédentes, **caractérisée en ce qu'**elle consiste en un adaptateur (9), **en ce qu'**avant son insertion dans le panneau alvéolaire (2), l'adaptateur (9) est pourvu d'un agent adhésif activable, et **en ce que** l'agent adhésif est conçu de manière à pouvoir être activé par le procédé d'insertion de l'adaptateur (9) dans le panneau alvéolaire (2).

11. Pièce de maintien (4) selon la revendication 10, **caractérisée en ce qu'**avant l'insertion dans le panneau alvéolaire (2), elle est pourvue d'un agent adhésif activable, en particulier d'au moins une perle de colle ou d'un agent adhésif micro-encapsulé, sur la première portion (9a) et/ou sur la deuxième portion (9b) de l'adaptateur (9).

12. Procédé pour la fabrication d'un système de fixation selon l'une des revendications 1 à 9, dans lequel les étapes suivantes sont exécutées :
- mise à disposition d'une ferrure de support (3) comportant un moyen de fixation murale (3a) et un moyen de support (3b) relié au moyen de fixation murale (3a),
- mise à disposition d'un panneau de couverture supérieur (2a),
- mise à disposition d'un panneau de couverture inférieur (2b),
- mise à disposition d'une couche intermédiaire (2c),
- mise à disposition d'au moins une pièce de maintien (4), en particulier d'au moins deux pièces de maintien (4), l'au moins une pièce de maintien (4) étant conçue selon la revendication 10 ou 11,
- assemblage du panneau de couverture supérieur (2a), du panneau de couverture inférieur (2b) et de la couche intermédiaire (2c), de manière à former une plaque de panneau alvéolaire de grand format,
- fabrication d'un panneau alvéolaire (2) par pressage et en particulier par découper la plaque de panneau alvéolaire en longueur, le panneau alvéolaire (2) obtenant ainsi un premier côté étroit (1a) et un deuxième côté étroit (1b), et
- insertion de l'au moins une pièce de maintien (4) dans le panneau alvéolaire (2), la pièce de maintien (4) respective étant pourvue, du côté frontal, d'une admission (5) pour le moyen de support (3b), après l'insertion.

13. Procédé selon la revendication 12, **caractérisé en ce qu'**avant l'insertion de la pièce de maintien (4), une échancrure (12) est intégrée dans la couche intermédiaire (2c) et/ou un évidement (11) dans le panneau de couverture supérieur (2a) et/ou dans le panneau de couverture inférieur (2b), en particulier par fraisage et/ou par perçage.

14. Procédé selon la revendication 12 ou 13, **caractérisé en ce que** l'admission du côté frontal (5) est prévue dans la pièce de maintien (4) respective après l'insertion de la pièce de maintien (4) dans le panneau alvéolaire (2).

15. Procédé selon l'une des revendications 12 à 14, **caractérisé en ce que** la pièce de maintien (4) est insérée dans le panneau alvéolaire (2) de façon mécanique, en particulier dans une chaîne de production automatisée, de préférence selon un procédé de production continue.
